# EUROPEAN PATENT SPECIFICATION

(11) **EP 0 651 034 B1**
(45) Date of publication and mention of the grant of the patent: **12.04.2000**
(21) Application number: 93914974.6
(22) Date of filing: 05.07.1993
(51) Int. Cl.: C09D 5/16

(54) **ANTIFOULING PAINT COMPOSITION**
FÄULNISVERHINDERNDE ANSTRICHZUSAMMENSETZUNG
COMPOSITION DE PEINTURE ANTISALISSURE

(30) Priority: 08.07.1992 JP 20602092
(43) Date of publication of application: 03.05.1995
(73) Proprietor: Dainippon Pharmaceutical Co., Ltd., Osaka-shi, Osaka 541 (JP)
(72) Inventor: SHIMOHIRO, Yoshiyuki, Sakai-shi, Osaka 590-01 (JP); WATAKABE, Takuji, Osaka-shi, Osaka 533 (JP); AOKI, Seiji, Kyoto-shi, Kyoto 607 (JP)
(74) Representative: Türk - Gille - Hrabal - Struck
(86) International application number: JP9300942
(87) International publication number: WO9401502

(56) References cited:
- JP-A- 54 015 939
- JP-A- 55 036 221

## Description

### TECHNICAL FIELD

The present invention relates to an antifouling paint composition. More specifically, the present invention relates to an antifouling paint composition which is able to prevent various aquatic organisms from adhering to a surface of an underwater structure such as a ship, harbour facilities, a buoy, a submarine station, a conduit of a power station, or a net for aquaculture, by painting the surface thereof.

### BACKGROUND ART

Many aquatic organisms of various kinds such as Balanus, Ascidiacea, Serpula, Cristaria and Enteromorpha are living in the sea, the river, lakes and marshes. The aquatic organisms adhere to an underwater surface of a structure having an underwater part, such as an equipment placed in water or a ship's hull, and cause various damages. For example, when the aquatic organisms adhere to a hull, the resistance in water increases, and the navigation speed decreases, and then a consumption of additional fuel is necessary to keep the same speed. When the aquatic organisms adhere to an equipment placed in water, not only the normal function of the equipment is disturbed, but also sometimes the corrosion of the equipment is promoted.

In order to prevent the above-mentioned adhesion of the aquatic organisms for a long term, an antifouling paint has been used. The antifouling paint is classified into two types: soluble matrix type and insoluble matrix type. In case of the antifouling paint of soluble matrix type, the effect is exerted by releasing the contained antifouling component into water. Generally, not only an antifouling component but also all components in the film are released from the outer layer into water. In case of the antifouling paint of insoluble matrix type, a soluble component such as an antifouling component is released into water, but an insoluble resin remains.

Hitherto, a tin compound having broad antibacterial spectrum, such as TBT (tributyltin) or TPT (triphenyltin), has been widely used as an antifouling component. However, the use of the tin compound is limited strictly because the compound has high toxicity.

The antifouling effect of a copper compound represented by cuprous oxide has been known for a long time, and the safety thereof is also high. Especially, cuprous oxide has been often used as an antifouling component because it has suitably low solubility in water and is more inexpensive than other organic antifouling components. However, the antifouling effect of cuprous oxide against Ulotrichaceae and Enteromorpha is insufficient. Thus, cuprous oxide by itself could not keep away all kinds of aquatic organisms, and sufficient antifouling effect could not be exerted unless it was used together with other antifouling component.

In Japanese Unexamined Patent Publication No. 15939/1979 and GB Patent Specification No. 1316501, an antifouling paint containing various metallic salts of 2-pyridinethiol-1-oxide was disclosed. The various metallic salts of 2-pyridinethiol-1-oxide have low toxicity and the safety for human body is high. The use of the metallic salts together with a compound such as bromosalicylanilide is disclosed, however, as to a use together with cuprous oxide, any concrete example or effect was not disclosed at all.

Both cuprous oxide and a metallic salt of 2-pyridinethiol-1-oxide have antifouling effect and low toxicity, and furthermore each of them complements the others in the species of aquatic organisms, on which the antifouling effect is exerted. Therefore, it was expected that an excellent antifouling paint could be obtained by using both compounds together.

However, it was found that there arises a fault that the viscosity increases and the gelation is caused as time goes on, if a zinc salt of 2-pyridinethiol-1-oxide, a representative metallic salt thereof, and cuprous oxide are used together. For example, in case that a zinc salt of 2-pyridinethio-1-oxide and cuprous oxide were mixed with trialkyltin poly methacrylate copolymer, which is a representative matrix of a soluble type, the obtained mixture could not be used for painting because of increased viscosity and gelation during storage. In case that the above-mentioned compounds were mixed with chlorinated rubber resin-rosin, which is a representative matrix of an insoluble type, the gelation of the mixture started immediately after mixing and even the preparation of an antifouling paint was impossible.

As described above, various metallic salts of 2-pyridinethiol-1-oxide as an antifouling component have been known. After the investigation by the present inventors, it was found that iron salt thereof and the like as well as a zinc salt thereof causes gelation when used together with a heavy metal compound such as cuprous oxide.

### DISCLOSURE OF THE INVENTION

As the result of the various and repeated investigations, the present inventors have found that among metallic salts of 2-pyridinethiol-1-oxide, only a copper salt thereof, being different from the other metallic salts, does not cause gelation when used together with cuprous oxide or cuprous thiocyanate and gives an antifouling paint composition which is excellent in stability for long-term storage. Consequently, the present invention has been, accomplished.

The present invention relates to an antifouling paint composition which contains cuprous oxide or cuprous thiocyanate and a copper salt of 2-pyridinethiol-1-oxide having the general formula [I]: 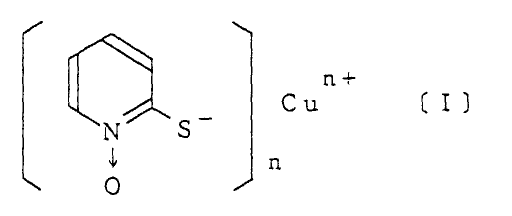 wherein n is 1 or 2, as an effective component.

In case that the antifouling paint composition of the present invention is used as an antifouling paint of a soluble matrix type, as a soluble resin matrix component, there is contained a polymer or copolymer having a functional group which gives water-solubility, for example, an acid with carboxyl group or sulfo group, or the salt or ester thereof, hydroxyl group, a primary, secondary or tertiary amino group, a quaternary ammonium salt, a poly(alkyleneoxide) addition product, or a compound which changes into a water-soluble compound by hydrolysis, such as the above-described trialkyltin poly methacrylate copolymer, alone or as a mixture.

In case that the antifouling paint composition of the present invention is used as an antifouling paint of an insoluble matrix type, as an elution auxiliary, there is contained a compound or a high molecular compound having the above-mentioned functional group which gives water-solubility, or a derivative thereof, such as rosin (pine resin). In addition, as an insoluble resin matrix component, there is contained a paint component which is generally used, for example, an alkyd resin, a natural rubber, a chlorinated natural rubber, a synthetic rubber, a copolymer of a vinyl compound such as vinyl chloride or vinyl acetate, an epoxy resin or a polyamide resin.

In both types, another ingredient which is generally used for a paint, and any additive such as a pigment, a solvent, a plasticizer, a filler or a curing accelerator may be also added if necessary.

The antifouling paint composition of the present invention may contain a known antifouling component which does not influence a physical property of the resin component. As a concrete example of such known antifouling component, an alkyltin compound, a disulfide compound, a metallic salt of dimethyldithiocarbamate, and the other non-tin antifouling compound are exemplified.

In the composition of the present invention, a content of cuprous oxide or cuprous thiocyanate and a copper salt of 2-pyridinethiol-1-oxide is not particularly limited, and preferably 0.1 to 10 parts by weight, more preferably 0.5 to 5 parts by weight, based on 1 part by weight of the resin component. When the content of cuprous oxide or cuprous thiocyanate and a copper salt of 2-pyridinethiol-1-oxide is less than 0.1 part by weight based on 1 part by weight of the resin component, the antifouling effect is worse. When the content is more than 10 parts by weight, the paint film becomes weak. The weight ratio of the cuprous oxide or cuprous thiocyanate to the copper salt of 2-pyridinethiol-1-oxide is not particularly limited, and preferably 1/10 to 10/1, more preferably 1/5 to 5/1. When the ratio of the cuprous oxide or cuprous thiocyanate to the copper salt of 2-pyridinethiol-1-oxide is less than 1/10, the cost becomes high, and when the ratio is more than 10/1, the antifouling effect is worse.

### BEST MODE FOR CARRYING OUT THE INVENTION

The present invention is more specifically explained by means of the following Reference Example, Examples and Comparative Examples, however, the present invention is not limited only to the Examples.

### (Reference Example)

Monomers and a solvent were mixed in a ratio shown in Table 1, and reacted at 80°C for 3 hours to give a copolymer. It was viscous liquid having a viscosity of about o.g Pa.s (9 poise).

**Table 1**

| Component | Parts by weight |
|---|---|
| Tributyltin methacrylate | 22.1 |
| Methyl methacrylate | 18.5 |
| Butyl acrylate | 15.9 |
| Azobisisobutyronitrile (Polymerization initiator) | 0.3 |
| Xylene | 43.2 |
| Total | 100.0 |

### (Example 1 and Comparative Examples 1 and 2) Antifouling paint of tinpolymer containing low content of copper

In a ratio shown in Table 2, a resin, antifouling components and a pigment were mixed and dispersed by means of a paint conditioner to give an antifouling paint of tinpolymer containing low content of copper. As the metallic salt of 2-pyridinethiol-1-oxide, a copper salt thereof was used in Example 1, an iron salt thereof was used in Comparative Example 1, and a zinc salt thereof was used in Comparative Example 2.

**Table 2**

| Component | Parts by weight |
|---|---|
| Product obtained in Reference Example | 25.0 |
| Cuprous oxide | 10.0 |
| Metallic salt of 2-pyridinethiol-1-oxide | 5.0 |
| Red iron oxide | 20.0 |
| Talc | 9.0 |
| Pulverized silica | 1.0 |
| Xylene | 30.0 |
| Total | 100.0 |

The viscosity of thus obtained antifouling paints was measured by means of Stormer viscometer. The viscosity was measured at 25°C, immediately after preparation, after being allowed to stand at room temperature for 12 days, and after being allowed to stand in a thermostated bath at 40°C for 12 days. The change of the viscosity was examined. The results were shown in Table 3.

**Table 3**

| | Initial viscosity | Viscosity measured after 12 days at r.t. | Viscosity measured after 12 days at 40°C |
|---|---|---|---|
| Ex. 1 | 77 K.U. | 82 K.U. | 83 K.U. |
| Com. Ex. 1 | 77 K.U. | 127 K.U. | 136 K.U. |
| Com. Ex. 2 | 76 K.U. | Gelation | Gelation |

Usually, it is said that a suitable viscosity of an antifouling paint is 60 K.U. to 90 K.U., and if the viscosity is not less than 110 K.U., it is difficult to paint. The antifouling paint of Example 1 had an appropriate viscosity as an antifouling paint, even after being allowed to stand for 12 days at room temperature or at 40°C. However, in case of the antifouling paints of Comparative Examples, the viscosity was so increased that it was difficult to paint. The antifouling paint of Comparative Example 2 was gelatinized.

### (Example 2 and Comparative Examples 3 and 4) Antifouling paint of tinpolymer containing high content of copper

Components shown in Table 4 were mixed and dispersed in the same way as in Example 1 to give an antifouling paint. As the metallic salt of 2-pyridinethiol-1-oxide, a copper salt thereof was used in Example 2, an iron salt thereof was used in Comparative Example 3, and a zinc salt thereof was used in Comparative Example 4.

**Table 4**

| Component | Parts by weight |
|---|---|
| Product obtained in Reference Example | 25.0 |
| Cuprous oxide | 20.0 |
| Metallic salt of 2-pyridinethiol-1-oxide | 10.0 |
| Red iron oxide | 10.0 |
| Talc | 4.0 |
| Pulverized silica | 1.0 |
| Xylene | 30.0 |
| Total | 100.0 |

The viscosity of thus obtained antifouling paints was measured by means of Stormer viscometer. The viscosity was measured at 25°C, immediately after preparation, after being allowed to stand at room temperature for 12 days, and after being allowed to stand in a thermostated bath at 40°C for 12 days. The change of the viscosity was examined. The results were shown in Table 5.

**Table 5**

| | Initial viscosity | Viscosity measured after 12 days at r.t. | Viscosity measured after 12 days at 40°C |
|---|---|---|---|
| Ex. 2 | 75 K.U. | 80 K.U. | 82 K.U. |
| Com. Ex. 3 | 77 K.U. | Gelation | Gelation |
| Com. Ex. 4 | 77 K.U. | Gelation | Gelation |

The antifouling paint of Example 2 had an appropriate viscosity as an antifouling paint even after being allowed to stand for 12 days at general temperature or at 40°C. However, the antifouling paints of Comparative Examples 3 and 4 were gelatinized.

### (Example 3 and Comparative Examples 5 and 6) Antifouling paint of chlorinated rubber-rosin containing high content of copper

Components shown in Table 6 were mixed and dispersed in the same way as in Example 1 to give an antifouling paint. As the metallic salt of 2-pyridinethiol-1-oxide, a copper salt thereof was used in Example 3, an iron salt thereof was used in Comparative Example 5, and a zinc salt thereof was used in Comparative Example 6.

**Table 6**

| Component | Parts by weight |
|---|---|
| Chlorinated rubber resin | 10.0 |
| Cuprous oxide | 25.0 |
| Metallic salt of 2-pyridinethiol-1-oxide | 10.0 |
| Rosin | 15.0 |
| Red iron oxide | 15.0 |
| Talc | 4.0 |
| Pulverized silica | 1.0 |
| Xylene | 20.0 |
| Total | 100.0 |

The viscosity of thus obtained antifouling paints was measured by means of Stormer viscometer. The viscosity was measured at 25°C, immediately after preparation, after being allowed to stand at room temperature for 12 days, and after being allowed to stand in a thermostated bath at 40°C for 12 days. The change of the viscosity was examined. The results were shown in Table 7.

**Table 7**

| | Initial viscosity | Viscosity measured after 12 days at r.t. | Viscosity measured after 12 days at 40°C |
|---|---|---|---|
| Ex. 3 | 76 K.U. | 79 K.U. | 80 K.U. |
| Com. Ex. 5 | Gelation | Not measured | Not measured |
| Com. Ex. 6 | Gelation | Not measured | Not measured |

The antifouling paint of Example 3 had an appropriate viscosity as an antifouling paint even after being allowed to stand for 12 days at general temperature or at 40°C. However, in Comparative Examples 5 and 6, the mixtures were gelatinized immediately after mixing, and it was impossible to prepare antifouling paints.

### (Example 4 and Comparative Examples 7 to 9) Antifouling ability of antifouling paint of tinpolymer containing low content of copper

Components shown in Table 8 were mixed and dispersed in the same way as in Example 1 to give an antifouling paint.

**Table 8**

| Component | Ex. 4 | Com. Ex. 7 | Com. Ex. 8 | Com. Ex. 9 |
|---|---|---|---|---|
| Product obtained in Reference Example | 25.0 | 40.0 | 30.0 | 35.0 |
| Cuprous oxide | 10.0 | - | 10.0 | - |
| Metallic salt of 2-pyridinethiol-1-oxide | 5.0 | - | - | 5.0 |
| Red iron oxide | 20.0 | 20.0 | 20.0 | 20.0 |
| Talc | 9.0 | 9.0 | 9.0 | 9.0 |
| Pulverized silica | 1.0 | 1.0 | 1.0 | 1.0 |
| Xylene | 30.0 | 30.0 | 30.0 | 30.0 |
| Total | 100.0 | 100.0 | 100.0 | 100.0 |

With thus obtained antifouling paint, a mild steel plate (200 × 400 × 2.3 mm), which was previously painted with a rust-inhibiting paint, was painted twice. The painted plate was submerged in the sea at a depth of 1 m at Izumiohtsu Harbor, Osaka. Then 6 months later and 12 months later, the organism-adhered area was measured. The ratio of the organism-adhered area to the area of all surfaces of the mild steel plate was presented as a percentage. The results were shown in Table 9.

**Table 9**

| | Organism-adhered area (%) | | Adhering organisms |
|---|---|---|---|
| | 6 months | 12 months | |
| Ex. 4 | 0 | 0 | |
| Com. Ex. 7 | 100 | 100 | Slime, Enteromorpha Ascidiacea, Bugula, Serpula, Balanus |
| Com. Ex. 8 | 3 | 20 | Slime, Enteromorpha, Bugula, Serpula, Balanus |
| Com. Ex. 9 | 0 | 10 | Bugula, Serpula |

The antifouling paint of Example 4 was not gelatinized and it was easy to paint. The antifouling paint could prevent an aquatic organism from adhering even for 12 months.

### INDUSTRIAL APPLICABILITY

The antifouling paint composition of the present invention contains cuprous thiocyanate or cuprous oxide and a copper salt of 2-pyridinethiol-1-oxide as an antifouling component, and is excellent in antifouling ability. In addition, the antifouling paint composition has low toxicity and is safe for human body. Also, it is not gelatinized and is excellent in stability for long-term storage.

## Claims

1. An antifouling paint composition which contains a cuprous oxide or cuprous thiocyanate and a copper salt of 2-pyridinethiol-1-oxide having the general formula [I] 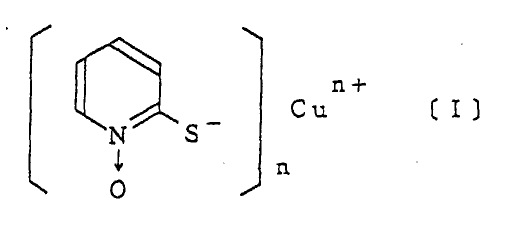 wherein n is 1 or 2, as an effective compound.

2. The antifouling paint composition of claim 1 characterized in that the total amount of said cuprous oxide or cuprous thiocyanate and said copper salt of 2-pyridinethiol-1-oxide is 0.1 part to 10 parts by weight based on 1 part by weight of the resin component, and the weight ratio of said cuprous oxide or cuprous thiocyanate to said copper salt of 2-pyridinethiol-1-oxide is 1/10 to 10/1.

## Patentansprüche

1. Fäulnisverhindernde Anstrichzusammensetzung, die ein Kupferoxid oder Kupferthiocyanat und ein Kupfersalz von 2-Pyridinthiol-1-oxid der allgemeinen Formel [I] 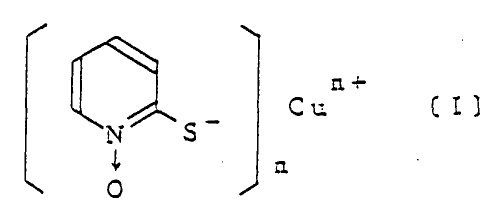 worin n 1 oder 2 ist, als eine wirksame Verbindung enthält.

2. Fäulnisverhindernde Anstrichzusammensetzung nach Anspruch 1, dadurch gekennzeichnet, daß die Gesamtmenge des erwähnten Kupferoxids oder des Kupferthiocyanates und des erwähnten Kupfersalzes von 2-Pyridinthiol-1-oxid 0,1 bis 10 Gewichtsteile bezogen auf 1 Gewichtsteil der Harz-Komponente beträgt, und das Gewichtsverhältnis des genannten Kupferoxides oder des Kupferthiocyanates zu dem erwähnten Kupfersalz von 2-Pyridinthiol-1-oxid 1/10 bis 10/1 beträgt.

## Revendications

1. Composition de peinture antisalissure qui contient un oxyde cupreux ou thiocyanate cupreux et un sel de cuivre de 2-pyridinethiol-1-oxyde présentant la formule générale [I] 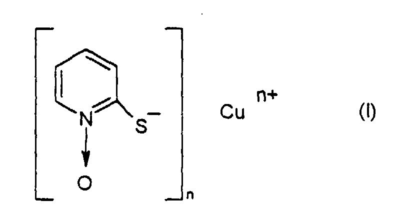 dans laquelle n est egal à 1 ou 2, comme composé efficace.

2. Composition de peinture antisalissure selon la revendication 1, caractérisée en ce que la quantité totale dudit oxyde cupreux ou thiocyanate cupreux et dudit sel de cuivre de 2-pyridinethiol-1-oxyde est de 0,1 partie à 10 parties en poids, rapportées à 1 partie en poids du constituant de résine, et le rapport massique dudit oxyde cupreux ou thiocyanate cupreux audit sel de cuivre de 2-pyridinethiol-1-oxyde est de 1/10 à 10/1.
